# EUROPÄISCHE PATENTANMELDUNG

(11) **EP 1 918 180 A1**
(43) Veröffentlichungstag der Anmeldung: **07.05.2008**
(21) Anmeldenummer: 07021066.1
(22) Anmeldetag: 27.10.2007
(51) Int. Cl.: B62D 59/00

(54) **Fahrzeuganordnung**

(30) Priorität: 03.11.2006 DE 102006052274
(71) Anmelder: Rheinmetall Landsysteme GmbH, 24107 Kiel (DE)
(72) Erfinder: Witzel, Götz, 24161 Altenholz (DE)
(74) Vertreter: Dietrich, Barbara

(57) **Zusammenfassung**

Die Erfindung betrifft eine Fahrzeuganordnung (1), bestehend aus einem Zugfahrzeug (2) und mindestens einem mit dem Zugfahrzeug (2) verbundenen Anhänger (3), der einen Zusatzantrieb (10) enthält.

Zur Verbesserung der Geländegängigkeit der Fahrzeuganordnung (1), insbesondere auf schwer befahrbarem Gelände, schlägt die Erfindung vor, als Zusatzantrieb (10) für den Anhänger (3) einen Elektromotor (10) zu verwenden.

## Beschreibung

Die Erfindung betrifft eine Fahrzeuganordnung, bestehend aus einem Zugfahrzeug und mindestens einem mit dem Zugfahrzeug verbundenen Anhänger, der einen Zusatzantrieb enthält.

Um die Geländegängigkeit von Fahrzeuganordnungen, die aus einem Zugfahrzeug und einem Anhänger (bei dem es sich beispielsweise auch um einen Sattelauflieger handeln kann) bestehen, auf schwer befahrbarem Gelände zu erhöhen, ist es bekannt, den Anhänger mit einem eigenen, auf mindestens einen Teil der Räder des Anhängers wirkenden Antrieb zu versehen. Als Zusatzantriebe werden dabei vorwiegend mechanische oder hydraulische Antriebe verwendet.

So sind beispielsweise aus den deutschen Auslegeschriften 1042392 und 1063467 Fahrzeuganordnungen bekannt, bei denen die Zapfwelle einer Zugmaschine (beispielsweise eines Schleppers) eine Welle treibt, die mit einem Getriebe des Anhängers verbunden ist, welche dann auf die Triebachse des Anhängers wirkt. Nachteilig bei diesen bekannten Fahrzeuganordnungen ist unter anderem der relativ große mechanische Aufwand. Außerdem muss jeweils zusätzlich zur Anhängerkupplung über die Zapfwelle der Zugmaschine eine Wellenverbindung zwischen dem Zugfahrzeug und dem Anhänger vorhanden sein.

Aus der DE 689 02 235 T2 ist ferner die Verwendung eines hydraulischen Zusatzantriebes für einen Anhänger bekannt. Dabei ist der Antriebsstrang des Zugfahrzeuges mit einer Hydraulikpumpe verbunden, die ihrerseits den in dem Anhänger angeordneten Hydraulikmotor antreibt. Auch derartige hydraulische Zusatzantriebe sind relativ aufwendig aufgebaut.

Der Erfindung liegt die Aufgabe zugrunde, eine aus einem Zugfahrzeug und mindestens einem Anhänger bestehende Fahrzeuganordnung anzugeben, bei der zur Verbesserung der Geländegängigkeit der Fahrzeuganordnung, insbesondere auf schwer befahrbarem Gelände, der Anhänger mit einem eigenen, auf einfache Weise in den Anhänger zu integrierenden Zusatzantrieb versehen ist.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im Wesentlichen auf dem Gedanken, als Zusatzantrieb des Anhängers wenigstens einen Elektromotor zu verwenden.

Dabei kann die Stromversorgung des Zusatzantriebes mit Hilfe mindestens eines Stromgenerators erfolgen, der vorzugsweise in dem Zugfahrzeug angeordnet und mit dem Antriebsstrang des Zugfahrzeuges gekoppelt ist. In einem derartigen Fall kann eine mechanische Verbindung zwischen dem Antriebsstrang des Zugfahrzeuges und der Triebachse des Anhängers entfallen.

Alternativ oder zusätzlich zu der Stromversorgung durch einen Stromgenerator kann auch eine andere Stromquelle, beispielsweise eine Batterie, zur Stromversorgung des Elektromotors herangezogen werden.

Selbstverständlich kann der Stromgenerator ebenfalls in den Anhänger integriert werden und mit einer Zapfwelle des Zugfahrzeuges in Wirkverbindung stehen. Allerdings ist in einem derartigen Fall der Nachteil einer zusätzlichen Wellenverbindung zwischen Zugfahrzeug und Anhänger in Kauf zu nehmen.

Ferner kann der Stromgenerator auch unabhängig von dem Antriebsmotor des Zugfahrzeuges betrieben werden.

Weitere Einzelheiten und Vorteile der Erfindung ergeben sich aus dem folgenden, anhand einer Figur erläuterten Ausführungsbeispiel.

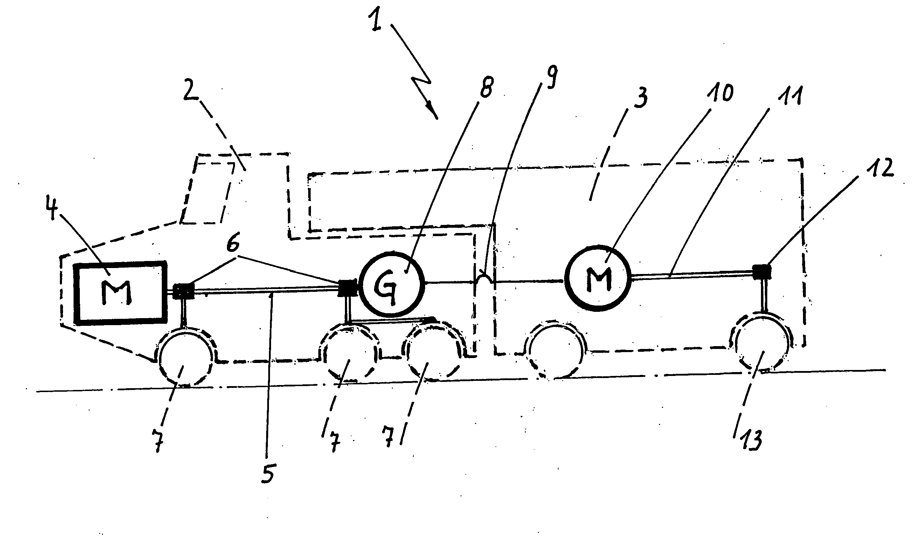

In der Figur ist mit 1 eine gestrichelt dargestellte Fahrzeuganordnung bezeichnet, die aus einem Zugfahrzeug 2 und einem als Sattelauflieger ausgebildeten Anhänger 3 besteht.

Das Zugfahrzeug 2 enthält als Antrieb einen Verbrennungsmotor 4, der in an sich bekannter Weise zum Beispiel über eine erste Antriebswelle 5 und erste Umlenkgetriebe 6 die Räder 7 des Zugfahrzeuges 2 antreiben kann.

Der Verbrennungsmotor 4 wirkt außerdem auf einen Stromgenerator 8, der einerseits mit einem in dem Zugfahrzeug 2 angeordneten Energiespeicher (z.B. eine nicht dargestellte Batterie) und andererseits über eine elektrische Verbindung 9 mit einem in dem Anhänger 3 angeordneten Elektromotor 10 verbunden ist.

Der Elektromotor 10 kann seinerseits mit einer Triebachse 11 verbunden sein, die in dem dargestellten Ausführungsbeispiel über ein zweites Umlenkgetriebe 12 die Hinterräder 13 des Anhängers 3 antreibt, oder kann alternativ zum Beispiel direkt die Hinterräder 13 des Anhängers 3 antreiben.

Die Erfindung ist selbstverständlich nicht auf das vorstehend beschriebene Ausführungsbeispiel beschränkt. So kann beispielsweise vorgesehen sein, dass der Elektromotor 10 des Anhängers alle Räder des Anhängers über die Triebachse 11 und entsprechende zweite Umlenkgetriebe 12 oder alle Räder direkt antreibt.

Ferner kann der Stromgenerator 8 auch in dem Anhänger 3 angeordnet sein, wobei die Antriebswelle 5 des Zugfahrzeuges 2 dann über eine in der Figur nicht dargestellte Zapfwelle mit einer in dem Anhänger 3 angeordneten zweiten Antriebswelle des Stromgenerators 8 verbunden wäre, oder ferner ein in der Figur nicht dargestellter zusätzlicher Nebenantrieb (APU) in dem Anhänger 3, der zum Beispiel manuell oder automatisch zugeschaltet wird, den Stromgenerator 8 antreibt.

Alle Stromgeneratoren können dabei auch motorisch wirken und alle Elektromotore auch generatorisch.

Die Steuerung der Drehzahl der Räder des Anhängers kann dabei manuell oder zum Beispiel über die Drehzahldifferenz zwischen den Rädern 7 des Zugfahrzeugs 2 und den Rädern 13 des Anhängers 3 automatisch geregelt werden. Dabei können weitere Parameter des Zuges, wie zum Beispiel der Knickwinkel zwischen Zugfahrzeug 2 und Anhänger 3 während einer Kurvenfahrt in die Regelung einfließen.

### Bezugszeichenliste

- 1: Fahrzeuganordnung
- 2: Zugfahrzeug
- 3: Anhänger
- 4: Verbrennungsmotor
- 5: (erste) Antriebswelle
- 6: (erste) Umlenkgetriebe
- 7: Rad
- 8: Stromgenerator, Stromquelle
- 9: elektrische Verbindung
- 10: Elektromotor, Zusatzantrieb
- 11: Triebachse
- 12: (zweite) Umlenkgetriebe
- 13: Hinterrad, Rad

## Patentansprüche

1. Fahrzeuganordnung, bestehend aus einem Zugfahrzeug (2) und mindestens einem mit dem Zugfahrzeug (2) verbundenen Anhänger (3), der einen Zusatzantrieb (10) enthält, **dadurch gekennzeichnet, dass** es sich bei dem Zusatzantrieb (10) des Anhängers (3) um wenigstens einen Elektromotor handelt.

2. Fahrzeuganordnung nach Anspruch 1, **dadurch gekennzeichnet, dass** der Elektromotor (10) des Anhängers (3) über eine elektrische Verbindung (9) mit mindestens einer Stromquelle (8) verbunden ist, die in dem Zugfahrzeug (2) und/oder in dem Anhänger (3) angeordnet ist.

3. Fahrzeuganordnung nach einem der Ansprüche 1 bis 3, **dadurch gekennzeichnet, dass** es sich bei der Stromquelle (8) um einen Stromgenerator und/oder eine Batterie handelt.

4. Fahrzeuganordnung nach Anspruch 1 oder 2, **dadurch gekennzeichnet, dass** das Zugfahrzeug (2) und/oder der Anhänger mindestens einen Verbrennungsmotor (4) zum Antrieb seiner Räder (7) und oder (13) enthält und dass der Stromgenerator (8) mit dem Verbrennungsmotor (4) des Zugfahrzeuges (2) und/oder Anhängers (3) verbunden ist.

5. Fahrzeuganordnung nach Anspruch 1 oder 2, **dadurch gekennzeichnet, dass** es sich bei dem Anhänger (3) um einen Sattelauflieger handelt.
